# EUROPEAN PATENT APPLICATION

(11) **EP 1 411 701 A2**
(43) Date of publication of application: **21.04.2004**
(21) Application number: 03252823.4
(22) Date of filing: 06.05.2003
(51) Int. Cl.: H04L 29/06, H04L 12/28

(54) **Wireless access authentication technology for wide area networks**

(30) Priority: 18.10.2002 US 419945 P; 19.12.2002 JP 2002367502
(71) Applicant: MELCO INC., Nagoya-shi, Aichi-ken 460-0011 (JP)
(72) Inventor: Ishidoshiro, Takashi, Melco Inc., Hightech Ctr., Nagoya-shi, Aichi-ken 457-8520 (JP)
(74) Representative: Tothill, John Paul

(57) **Abstract**

Wireless access authentication technology that allows access authentication and registration for a plurality of terminal devices (30) to a plurality of connection devices (20a-20c) via a wireless connection. The access authentication and registration is distributed among the different connection devices (20a-20c) avoiding problems associated with central authentication systems, and terminal devices (30) can connect to a wide area network via different connection devices (20a-20c) through a wireless connection.

## Description

The present invention relates to access authentication technology for wide area networks, and more particularly relates to authentication technology for a connection device that provides to terminal devices an access point to a wide area network via a wireless network, whereby access authentication is performed by verifying the authentication information of terminal devices that request to access the wide area network.

In an access point system having connection devices situated at a plurality of physical locations to provide terminal devices with access points to a wide area network via wireless networks, it is attempted to prevent unauthorized use of the access point system by verifying authentication information for registered terminal devices when a terminal device requests a connection device to communicate with the wide area network. Conventionally, access authentication is accomplished by means of an authentication server that performs integrated administration of authentication information for all terminal devices being used in the access system.

For example, JAPANESE PATENT LAID-OPEN GAZETTE No. 2002-124952 discloses an access authentication technology used by an authentication server that performs integrated administration of authentication information for all terminal devices being used in the access system.

However, where access authentication relies on an authentication server that performs integrated administration of authentication information, the system has the weakness that if the authentication server should go down for some reason, none of the terminal devices will be able to access the system; also, where a number of access authentications are concentrated in a single authentication server, the increased load on the authentication may result in the problem of delay in access authentication.

With a view to overcoming the problems described above, it is an object of the present invention to provide access authentication technology that affords improved stability of an access point system with regard to access authentication of terminal devices.

To solve at least one of above problems, the present invention provides a wide area network system. The system comprises:
a plurality of connection devices connected to a wide area network and exchanging data via said wide area network; and
terminal devices that can connect to any of said connection devices through wireless communication,
wherein said each individual connection device comprises:
authentication information archiving means that archives authentication information for a plurality of said terminal devices, said authentication information including identifying data identifying said terminal devices; and
authentication means that, when receiving from a terminal device requesting connection to said wide area network, identifying information that identifies said terminal, and when no identifying information for said terminal device requesting connection is present in the authentication information archiving means in said connection device, transmits identifying information for said terminal device to another connection device via said wide area network, and performs access authentication for said terminal device.

The method for authenticating terminal devices in a wide area network system of the present invention provides a method of authenticating a terminal device connected via wireless communication to any of a plurality of connection devices, said connection devices being connected to a wide area network and exchanging data via said wide area network, said method comprising the steps of:
archiving authentication information for a plurality of said terminal devices, said authentication information including identifying information identifying said terminal devices, at each individual connection device; and
receiving at a connection device identifying information from a terminal device requesting connection to said wide area network, searching said authentication information archived in the connection device that received said identifying information, transmitting said identifying information for said terminal device to another connection device via said wide area network when no identifying information for said terminal device requesting connection is present, and performing access authentication for said terminal device.

According to this wide area network system and authentication method therefor, authentication of terminal devices in a system that includes a plurality of connection devices connected in a wide area network can be performed in a distributed manner, by a number of connection devices. Where terminal devices are enabled to access a wide area network using a large number of connection devices capable of wireless communication, connections made to the wide area network by terminal devices are not fixed connections, and in some instances terminals will access the network while moving between a number of connection devices; in such systems, this distributed model of administration reduces the resources required for administering authentication data, as compared to integrated administration of all terminal devices. According to the wide area network system and authentication method therefor of the present invention described hereinabove, authentication information for terminal devices is administered in a distributed manner by a plurality of connection devices, and thus in the event that one of the connection devices should go down for example, access authentication will not be disabled for all terminal devices; and if a terminal device cannot receive access authentication because its authentication information cannot be verified, its authentication information can be re-registered with a different connection device, thereby enabling access authentication. Additionally, the processing load associated with access authentication for a plurality of terminal devices throughout the entire system can be distributed among a plurality of connection devices. This affords improved stability of the access point system in access authentication of terminal devices. Additionally, the burden on the access point administration may be reduced. Convenience for users of terminal devices may be enhanced as well.

As regards the authentication information that includes identifying information for a terminal device, when a terminal device contacts a different connection device, since the terminal knows which connection device was previously connected to and authenticated by, when the terminal device requests a wireless connection to a new connection device, it will preferably identify itself through connection device identifying information which identifies the connection device in which its authentication information resides. The connection device receiving the identifying information for the connection device in which the authentication information for the terminal device resides can then request the connection device identified by this identifying information to authenticate the terminal device. With this arrangement, a terminal device can be readily authenticated by a different connection device.

In such an access authentication system and method therefor, authentication information for a terminal device is registered with a connection device providing an access point for terminal devices that have not had their authentication information registered. When a terminal device whose authentication information has been registered is subsequently provided with an access point by a different (external) connection device, access authentication for the terminal device is performed on the basis of authentication information registered with the connection device that previously provided the access point. Thus, since authentication information for terminal devices is administered in a distributed manner by a plurality of connection devices, in the event that one of the connection devices should go down for example, access authentication will not be disabled for all terminal devices; and if a terminal device cannot receive access authentication because its authentication information cannot be verified, its authentication information can be re-registered with a different connection device, thereby enabling access authentication. Additionally, the processing load associated with access authentication for a plurality of terminal devices throughout the entire system can be distributed among a plurality of connection devices. This affords improved stability of the access point system in access authentication of terminal devices. Additionally, the burden on the access point administration may be reduced. Convenience for users of terminal devices may be enhanced as well.

Connection devices employed in the various wide area network systems and authentication methods described hereinabove may take any of a number of conceivable embodiments. With such connection devices, a connection device that itself has registered the authentication information for a particular terminal device will, in the event that a different connection device receives from this terminal a request for access to the wide area network, perform the access authentication in place of the other connection device. On the other hand, a connection device that itself has not registered the authentication information for a particular terminal device will, in the event of receiving from this terminal a request for access to the wide area network, provide an access point to the terminal device, on the basis of access authentication by a different connection device in which authentication information for the this terminal device has been registered. Accordingly, since a plurality of connection devices register/administer authentication information for terminal devices in a distributed manner, in the event that one of the connection devices should go down for example, access authentication will not be disabled for all terminal devices; and a terminal device whose authentication information's registered with a down connection device can re-register its authentication information with a different connection device. Additionally, the processing load associated with access authentication for a plurality of terminal devices throughout the entire system can be distributed among a plurality of connection devices. This affords improved stability of the access point system in access authentication of terminal devices. Additionally, the burden on the access point administration may be reduced.

Connection devices of the present invention having the arrangement described hereinabove can take the following embodiments. Identifying information for terminal devices may consist of a MAC address. With such a connection device, the connection device performs access authentication by cross-checking the MAC address of a terminal device with its registered authentication data. Thus, since the MAC address is a unique number (i.e., only one in the world) assigned individually to a hardware networking device, a connection device can perform access authentication considering any user accessing the network with given terminal device hardware to be the same given user. This enables the user of a terminal device to access the wide area network using the terminal device, without having to enter a password or other identifying data.

Identifying information relating to a terminal device may consist of identifying information relating to swappable identifying information means provided to said terminal device. With such a terminal device, identifying information relating to the swappable identifying information means provided to a terminal device is cross-checked with registered authentication information to perform access authentication. Accordingly, a user possessing a multiplicity of terminal devices can swap out the identifying information means from a registered terminal device into another, unregistered terminal device, thereby allowing access to the wide area network using this other terminal device, without having to re-register authentication information. For example, possible swappable identifying information means provided to a personal computer terminal device would include a PC card, USB key, or the like.

Identifying information relating to a connection device may consist at a minimum of the MAC address or global IP address on the wide area network. With such a connection device, when the connection device provides an access point for a terminal device whose authentication information has been registered, connection via the wide area network to another connection device whose authentication information has been registered is established on the basis of, at a minimum, the MAC address or global IP address on the wide area network. Thus, since the MAC address is a unique number (i.e., only one in the world) assigned individually to a hardware networking device, a connection device can identify, over the wide area network, another connection device that administers the authentication information for a terminal device.

Periodic registration canceling means for canceling registration of authentication information relating to a terminal device after a predetermined period of time has elapsed since registration by said registration means may be provided. With such a connection device, the connection device examines multiple instances of successively registered authentication information and sequentially cancels those instances for which a predetermined period of time has elapsed since registration, ensuring enough storage capacity to register new authentication information. Accordingly, the storage capacity needed to store authentication information can be reduced, authentication information can be updated periodically, and authentication information for terminal devices that no longer use a connection device can be deleted.

Instance registration deleting means for sequentially deleting registration of authentication information relating to previously registered terminal devices when instances of authentication information relating to terminal devices registered by said registration means reaches a predetermined number may be provided. With such a connection device, once multiple instances of successively registered authentication information reach a certain number, the connection device deletes previously registered instances in order from the earliest, ensuring enough storage capacity to register new authentication information. Accordingly, the storage capacity needed to store authentication information can be reduced, authentication information can be archived until the storage capacity becomes full, and authentication information for terminal devices that no longer use a connection device can be deleted.

An administration terminal device for administering authentication information relating to terminal devices registered by said registration means may be provided. With such a connection device, some or all of the administration processes of authentication information registered by connection devices can be performed by an administration terminal device separate from the connection devices. Accordingly, the processing load for administering authentication information in connection devices can be reduced, and the connection device administrator can administer authentication information from a remote location vis-a-vis the connection devices, by operating the administration terminal device.

The aforementioned wide area network could be the Internet for example, and the aforementioned wireless network could be a wireless local area network to which a plurality of terminal devices can connect. Accordingly, by installing connection devices in a wide variety of locations and having a plurality of terminal devices connect to a single connection device, the convenience of terminal devices provided with access points can be enhanced.

In an aspect thereof pertaining to a terminal device for said access authentication system, the invention provides a terminal device for accessing a wide area network by being provided, by a connection device via a wireless network, with an access point to the wide area network on the basis of access authentication performed by verifying registered authentication information, said terminal device comprising:
terminal registration means that, under a condition of authentication information having not being registered, when provided with an access point by a connection device, transmits to said connection device identifying information relating to said terminal device, receives from said connection device identifying information relating to said connection device, and archives said information; and
terminal providing means that, under a condition of authentication information having been registered, when provided with an access point by another connection device different from said connection device, transmits to the another connection device the archived identifying information relating to said connection device, and identifying information relating to said terminal device.

According to this terminal device, the terminal device stores in memory identifying information relating to the connection device in which authentication information for the terminal device has been registered. In the event that the terminal device is subsequently provided with an access point by a different connection device, it receives access authentication by transmitting to this other connection device the identifying information relating to the connection device in which authentication information for the terminal device has been registered. Thus, provided that its authentication information has been registered in a certain connection device, the terminal device can access the wide area network without having to re-register its authentication information when provided with an access point by a different connection device.

Terminal devices of the present invention having the arrangement described hereinabove can take the following embodiments. Swappable identifying information means may be provided for storing identifying information relating to the terminal device, for transmission to connection devices. Accordingly, a user possessing a multiplicity of terminal devices can swap out the identifying information means from a registered terminal device into another, unregistered terminal device, thereby allowing access to the wide area network using this other terminal device, without having to re-register authentication information.

A preferred embodiment of the present invention will now be described by way of example only and with reference to the accompanying drawings, in which:
Fig. 1 illustrates a system diagram of an entire access point system 10 in an embodiment of the invention.
Fig.2 is a flow chart showing process executed by control device 210a of connection device 20a and control device 311 of terminal device 30 during initial access authentication in the invention.
Fig. 3 is a flow chart showing process executed by control device 210b of connection device 20b during routine access authentication in the invention.
Fig. 4 is a flow chart showing process executed by control device 210a of connection device 20a during routine access authentication in the invention.
Fig. 5 is a flow chart showing process executed by control device 311 of terminal device 30 during routine access authentication in the invention.
Fig. 6 illustrates a sequence diagram describing routine access authentication in the invention.
Fig. 7 is a flow chart showing information administration process executed by control device 210a of connection device 20a.

A fuller understanding of the design and advantages of the present invention is provided through the following description of an access point system embodying the invention, taking as a example thereof an access point system employing wireless local area networks (hereinafter, wireless LANs).

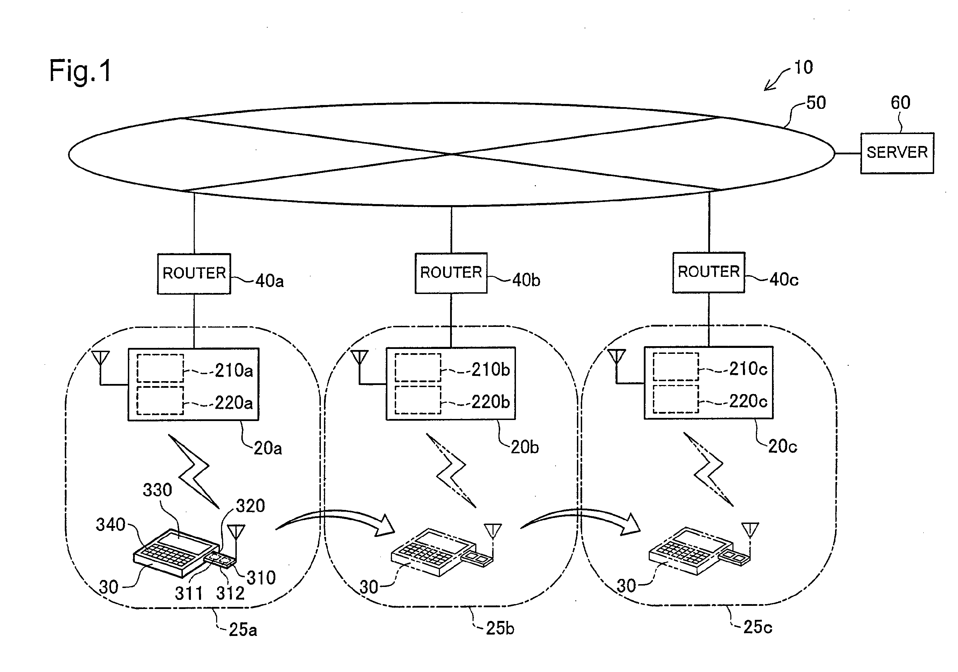

Fig. 1 is a system diagram of an entire access point system 10 in an embodiment of the invention. Access point system 10 utilizes a wide area network, namely, the Internet 50. Access point system 10 includes connection devices 20a, 20b, 20c. These connection devices 20a, 20b, 20c connect to terminal devices 30 through wireless LANs. These wireless LANs are conceivably wireless LANs in accordance with the IEEE 802.11b standard. In Fig. 1, not all terminal devices 30 are shown; in actual practice, however, a plurality of terminal devices 30 would be connected to access point system 10. The number of connection devices 20a, 20b, 20c is not limited to three; any number of two or greater is sufficient.

Routers 40a, 40b, 40c are connected to the Internet 50. Connection devices 20a, 20b, 20c are in turn connected to routers 40a, 40b, 40c respectively. Routers 40a, 40b, 40c interconnect the different networks, i.e., Internet 50 and the wireless LANs of connection devices 20a, 20b, 20c. In this way, connection devices 20a, 20b, 20c can exchange data via the Internet 50, and exchange of data among connection devices 20a, 20b, 20c is also possible.

In response to access requests, i.e. requests to access the Internet 50, from terminal devices, connection devices 20a, 20b, 20c, on the basis of access authentication by verifying registered authentication information, provide access points to the Internet 50 via the wireless LANs. Access authentication is performed in order that an access point is provided only to a terminal device 30 used by a specific individual authorized to use the access point system 10. The authentication information is pre-registered data for verifying whether a terminal device 30 belongs to a user authorized to use the system. If a cross-check of identifying information identifying the user and transmitted by a terminal device 30, with the registered authentication information, enables a connection device 20a, 20b, 20c to authenticate that the terminal device 30 belongs to a user authorized to use the system, it then relays data between the terminal device 30 and a server 60 etc. In this way, terminal devices 30 can access the Internet 50 via connection devices 20a, 20b, 20c, in order to exchange data with a server 60 etc. connected to the Internet 50. Exemplary modes of Internet 50 access by terminal devices 30 include accessing web content, sending and receiving e-mail, and Internet telephony.

Connection devices 20a, 20b, 20c can provide access points to terminal devices 30 located within wireless zones 25a, 25b, 25c that are ranges within which connections to terminal devices 30 are possible through the respective wireless LANs. In Fig. 1, in order to show that a terminal device 30 located within wireless zone 25a subsequently moves into wireless zones 25b and 25c, the terminal device 30 is shown in double dot/dashed lines in those zones.

The internal architecture of connection devices 20a, 20b, 20c is now described. Connection device 20a comprises a control unit 210a having a CPU, ROM, RAM and the like; a storage device 220a such as a hard disk drive (HDD), and interfaces for Internet 50, wireless LAN, and so on. Control unit 210a executes various processes in connection with providing an access point for terminal devices 30. Storage device 220a stores data resulting from processes executed by control unit 210a, and also has archived therein the unique MAC address assigned to connection device 20a by the manufacturer. When connection device 20a is linked to a router 40a, the control unit 210a stores the global IP address for the router 40a (which enables it to be identified over the Internet 50) in storage device 220a. When other connection devices 20b, 20c exchange data with this connection device 20a, the MAC address and IP address are used as identifying information for connection device 20a to enable connection device 20a to be identified over the Internet 50. This identifying information is not limited to MAC address and IP address; any information enabling connection device 20a to be identified over the Internet 50 is acceptable. Connection devices 20b, 20c are similarly provided respectively with control devices 210b, 210c and storage devices 220b, 220c, as well as interfaces for Internet 50, wireless LAN, and so on. Connection devices 20a, 20b, 20c are not limited to having on-board control devices 210a, 210b, 210c and storage devices 220a, 220b, 220c; some or all of these may be provided through a wireless or wired connection.

The internal architecture of a terminal device 30 is now described. Terminal device 30 may be an ordinary mobile computer comprising a CPU, ROM, RAM, HDD, PCMCIA interface 320, display 330, keyboard 340 and the like. This terminal device 30 has a wireless card 310 that is removable from PCMCIA interface 320. By being provided with wireless card 310, terminal device 30 can connect to connection devices 20a, 20b, 20c via wireless LAN.

The wireless card 310 provided to terminal device 30 comprises a control device 311 having a CPU, ROM, RAM and the like; a storage device 312 of nonvolatile memory such as EEPROM; a wireless LAN interface, and the like. Control unit 311 executes various processes relating to provision of access points by connection devices 20a, 20b, 20c. Storage device 312 stores data resulting from processes executed by control unit 311, and also has archived therein the unique MAC address assigned to wireless card 310 by the manufacturer. During access authentication by connection devices 20a, 20b, 20c, the MAC address is used as identifying information for terminal device 30 to enable the user of terminal device 30 to be identified. This identifying information is not limited to MAC address; any information enabling connection devices 20a, 20b, 20c to identify the user of terminal device 30 during access authentication is acceptable. Terminal device 30 is not limited to a device having a removable wireless card 310; a portable information terminal or other terminal having an on-board integrated wireless card 310 function is acceptable.

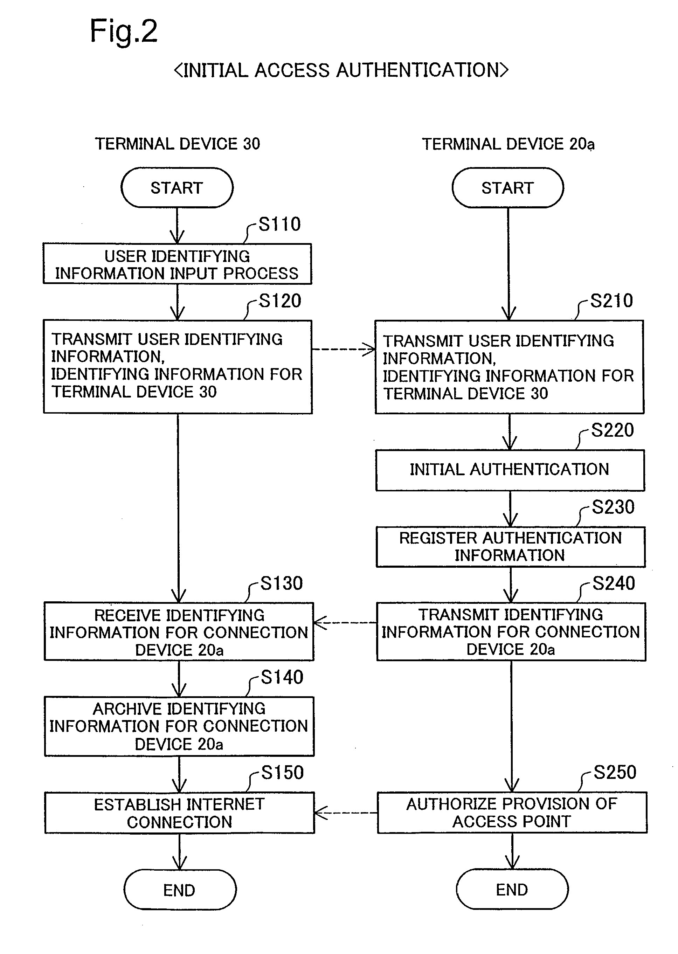

Initial access authentication by a connection device 20a performed during access authentication of a terminal device 30 that is not currently registered is now described. Fig. 2 is a flow chart showing process executed by control device 210a of connection device 20a and control device 311 of terminal device 30 during initial access authentication in the invention. In Fig. 2, a flow chart for the process executed by control device 210a of connection device 20a is shown at right, and a flow chart for the process executed by control device 311 of terminal device 30 is shown at left.

When terminal device 30 makes an access request to a connection device 20a to request access to the wide area network, if the control device 311 of terminal device 30 has never received access authentication before, or if a registration request, described later, has been received, the control device 311 of terminal device 30 initiates the process shown at left in Fig. 2. When the process starts, a user identifying information input process is executed to read user identifying information input by the user of terminal device 30 (Step S110). In this user identifying information input process, control device 311 reads user identifying information input via keyboard 340 or other means by the user of terminal device 30. This user identifying information is a password previously provided to users of terminal devices 30 authorized to use the access point system 10.

After completing the user identifying information input process (Step S110), the control device 311 of terminal device 30 transmits the user identifying information read during the user identifying information process (i.e. the password) and the MAC address of the wireless card 310 (which is pre-archived in storage device 312 as identifying information for terminal device 30) to connection device 20a via the wireless LAN of connection device 20a (Step S120).

When the control device 210a of connection device 20a receives transmission of user identifying information and terminal device 30 identifying information from terminal device 30, it initiates the process shown at right in Fig. 2. When the process starts, user identifying information and terminal device 30 identifying information are received, read (Step S210), and initial authentication executed (Step S220). This initial authentication involves analyzing the user identifying information (password) to verify that the user of terminal device 30 is authorized to use the access point system 10. Initial authentication is not limited to password authentication; another authentication method that enables the user of terminal device 30 to be identified is acceptable. For example, credit card authentication would be acceptable. Credit card authentication involves verifying the terminal device 30 user's credit card number with the credit card issuer's verification server to which connection device 20a connects via the Internet 50 or the like.

When initial authentication is complete (Step S220), the authentication information from terminal device 30 used for the current access authentication is archived as data in storage device 220a, to register the authentication information for terminal device 30 (Step S230). This authentication information, associated with other information such as the terminal device 30 identifying information read in Step S210, as well as the date that the registration process was performed, user name, member number, and the like, is stored in memory. Authentication information is not limited to the information mentioned above; information for use in administering access authentication and identifying information is acceptable as well. Subsequently, identifying information for connection device 20a archived in storage device 220a, namely the MAC address of connection device 20a and the IP address of router 40a, are transmitted to terminal device 30 via the wireless LAN of connection device 20a (Step S240). Provision of an access point to terminal device 30 is then granted (Step S250), and the process terminates.

Meanwhile, when the connection device 20a transmits identifying information for connection device 20a (Step S240), control device 311 of terminal device 30 receives this identifying information, reads it (Step S130), and stores it in storage device 312 (Step S140). When connection device 20a subsequently grants provision of an access point (Step S250), an Internet connection is established (Step S150), and the process terminates. In this way, terminal device 30 is provided with an access point by connection device 20a, enabling exchange of data with the Internet 50.

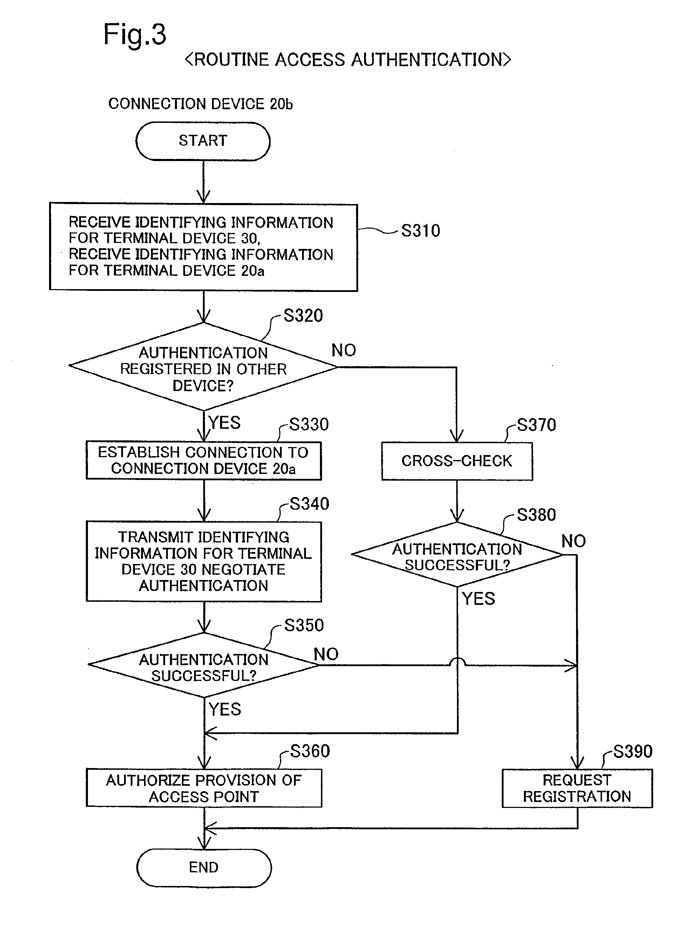

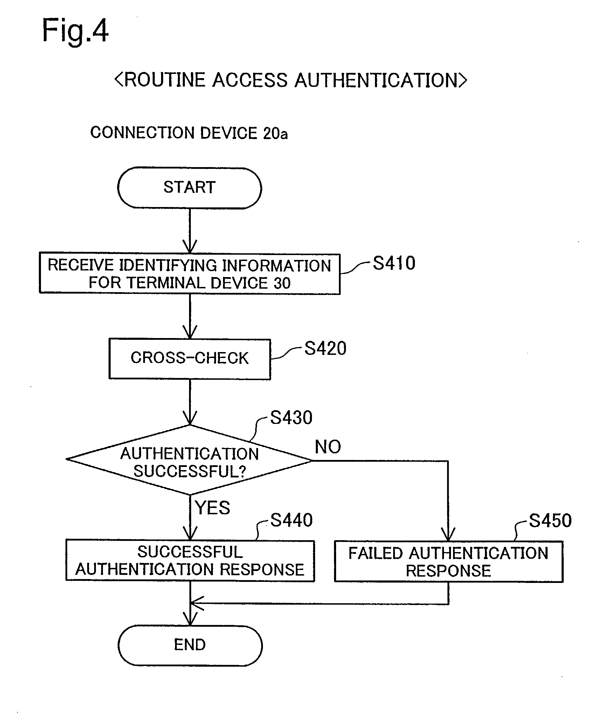

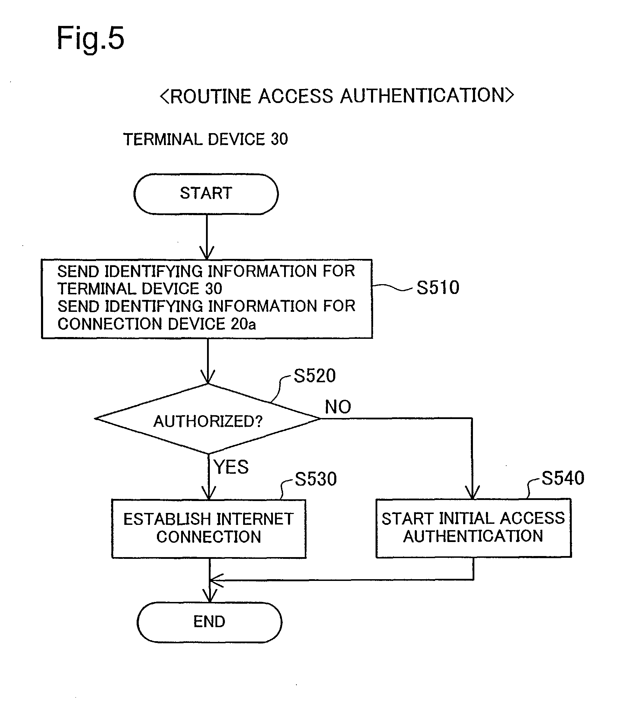

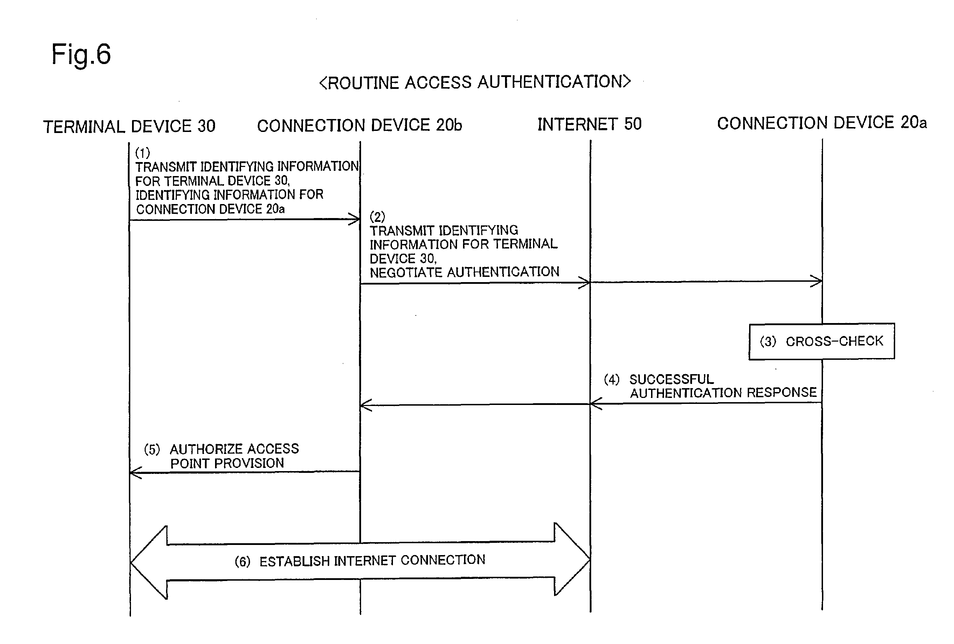

Routing access authentication by which a connection device 20b performs access authentication for a terminal device 30 whose authentication information has been registered is now described. Fig. 3 is a flow chart showing process executed by control device 210b of connection device 20b during routine access authentication in the invention. Fig. 4 is a flow chart showing process executed by control device 210a of connection device 20a during routine access authentication in the invention. Fig. 5 is a flow chart showing process executed by control device 311 of terminal device 30 during routine access authentication in the invention. Fig. 6 is a sequence diagram describing routine access authentication in the invention.

Once the control device 311 of terminal device 30 has completed the aforementioned initial access authentication and received provision of an access point by connection device 20a, if terminal device 30 should then move into the wireless zone 25b of connection device 20b, it makes an access request to connection device 20b. The control device 210b of connection device 20b receiving this access request then requests the terminal device 30 to send identifying information for terminal device 30, and identifying information for the connection device in which its authentication information is registered.

When control device 311 of terminal device 30 receives this request for identifying information from connection device 20b, it initiates the process shown in Fig. 5. When the process starts, identifying information for the terminal device 30, namely, the MAC address of the wireless card 311 pre-archived in storage device 312, and identifying information for the connection device 20a that registered the authentication information, namely, the connection device 20a identifying information archived in storage device 312 during the initial access authentication described previously, are transmitted to connection device 20b via the wireless LAN of connection device 20b (Step S510 in Fig. 5, process (1) shown in Fig. 6).

When the control device 210b of connection device 20b receives from terminal device 30 identifying information for terminal device 30 and identifying information for connection device 20a, it initiates the process shown in Fig. 3. When the process starts, identifying information for terminal device 30 and identifying information for connection device 20a are received and read (Step S310). It then makes a determination as to whether the received identifying information for the connection device is identifying information for the receiving connection device itself (Step S320). In the present example, terminal device 30 transmits identifying information for connection device 20a, which means that authentication information for the terminal device 30 is registered with another device, namely, connection device 20a. Once it is determined that authentication information is held by another device (Step S320), connection device 20a is identified over the Internet 50 on the basis of the identifying information for connection device 20a, and a connection enabling communication with connection device 20a via the Internet 50 is established (Step S330). Identifying information for terminal device 30 is sent to connection device 20a over this connection, and authentication is negotiated (Step S340 in Fig. 3, process (2) shown in Fig. 6).

When control device 210a of connection device 20a receives the authentication negotiation from connection device 20b via the Internet 50, it initiates the process shown in Fig. 4. When the process starts, it receives the identifying information for terminal device 30 and reads it (Step S410). The read identifying information for terminal device 30 is then cross-checked with the authentication information that was archived in storage device 220a during the initial access authentication described previously. (Step S420 in Fig. 4, process (3) shown in Fig. 6). If authentication information has been registered and terminal device 30 can be authenticated (Step S430), a response to the effect that authentication was successful is sent to connection device 20b via the Internet 50 (Step S440 in Fig. 4, process (4) shown in Fig. 6), and the process terminates. If, on the other hand, authentication information has not been registered and terminal device 30 cannot be authenticated (Step S430), a response to the effect that authentication failed is sent to connection device 20b via the Internet 50 (Step S450), and the process terminates.

If control device 210b of connection device receives a response to the effect that authentication was successful from connection device 20a via the Internet 50 (Step S350), it authorizes provision of an access point to terminal device 30 (Step S360 in Fig. 3, process (5) shown in Fig. 6), and terminates the process. If on the other hand it receives a response to the effect that authentication failed from connection device 20a via the Internet 50 (Step S350), it requests terminal device 30, via the wireless LAN of connection device 20b, to register authentication information with connection device 20b (Step S390), and terminates the process.

If control device 311 of terminal device 30 receives authorization to provide an access point from connection device 20b via the wireless LAN of connection device 20b, it establishes a connection to the Internet (Step S530 in Fig. 5, process (5) shown in Fig. 6), and terminates the process. In this way, terminal device 30 receives provision of an access point by connection device 20b, enabling it to exchange data with the Internet 50. If on the other hand, it receives from connection device 20b a request to register rather than authorization to provide an access point (Step S520), the initial access authentication process shown in Fig. 2, described earlier, is performed with connection device 20b (Step S540). The process then terminates.

In this example, authentication information for terminal device 30 is registered with connection device 20a, but if it were instead been registered with connection device 20b, for example, connection device 20b would instead perform routine access authentication to access authentication of terminal device 30 whose authentication information has been registered with connection device 20a, which process is now described. In this case, after Step S310 shown in Fig. 3 has been completed, control device 210b of connection device 20b makes a determination as to whether authentication information is registered with itself (Step S370), and cross-checks the read identifying information for terminal device 30 with the authentication information archived in storage device 220b (Step S370). Subsequently, if the authentication information has been registered and the terminal device can be authenticated (Step S380), provision of an access point to terminal device 30 is authorized (Step S360), and the process terminates. If, on the other hand, authentication information has not been registered and the terminal device cannot be authenticated (Step S380), connection device 20b request the terminal device 30, via the wireless LAN of connection device 20b, to register authentication information with connection device 20b (Step S390), and terminates the process.

In the present example, the case of a terminal device 30 registered with connection device 20a moving to connection device 20b has been described, but the process would be similar in the event that it subsequently moved from connection device 20b to connection device 20c. That is, in this case connection device 20c would negotiate authentication with connection device 20a, and determine whether to provide an access point to terminal device 30.

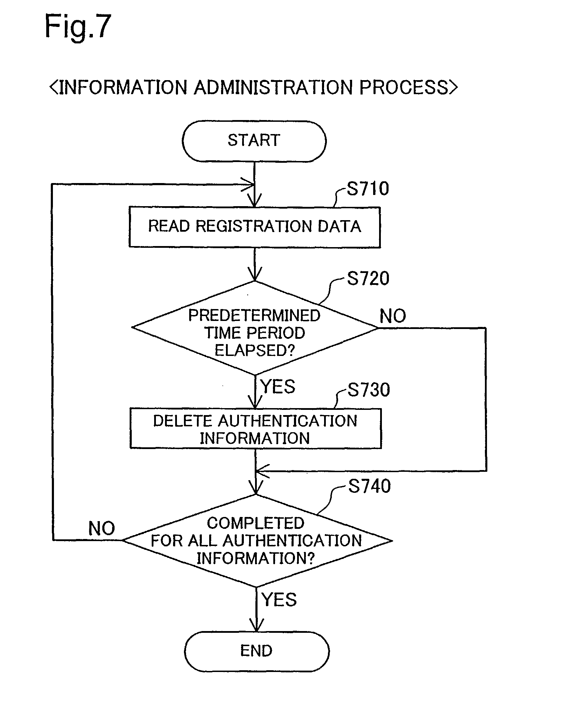

The information administration process by which control device 210a of connection device 20a administers authentication information archived in storage device 220a is now described. Fig. 7 is a flow chart showing information administration process executed by control device 210a of connection device 20a. Control device 210a of connection device 20a executes this information administration process under predetermined timing. When the process shown in Fig. 7 starts, the date that the registration process was performed (which is archived in storage device 220a as data associated with the authentication information in the initial access authentication described earlier) is read (Step S710). It is then determined whether a predetermined period of time (one month, for example) has elapsed since the authentication information was last registered (Step S720). If the predetermined period of time has elapsed since registration (Step S720), the authentication information is deleted from storage device 220a (Step S730). If on the other hand, the predetermined period of time has not elapsed since registration (Step S720), the authentication information is not deleted. Next, if this process has been completed for all authentication information archived in storage device 220a (Step S740), the process is terminated. If on the other hand, the process has not been completed for all authentication information (Step S740), the process is repeated beginning at Step S710. The information administration process is performed analogously in the control devices 210b, 201c of connection devices 20b, 20c.

The predetermined time interval since registration which serves as the benchmark for deleting authentication information may be selected with reference to various factors, such as the storage capacity of storage device 220a, security concerns, and so on. Alternatively, where the condition for deleting authentication information in the information administration process is when registration of authentication information reaches a predetermined number of instances, authentication information relating to a previously registered terminal devices may be deleted in order, starting with the earliest. Authentication information archiving and the information administration process may be carried out by connecting an administration terminal device, such as an ordinary computer, to connection device 20a by a LAN or the like.

In the example described hereinabove, for a terminal device 30 whose authentication information is administered by connection device 20a, when connection device 20b or 20c receives an access request from terminal device 30, connection device 20a performs access authentication, instead of connection device 20b or 20c. On the other hand, for a terminal device 30 whose authentication information is not administered by connection device 20b or 20c, when either of these devices receives an access request from terminal device 30, it provides an access point to terminal device 30 on the basis of access authentication by connection device 20a, which holds the authentication information for the terminal device 30. Thus, since authentication information for terminal devices is administered in distributed fashion among connection devices, in the event that one of the connection devices should go down, access authentication will not be disabled for all terminal devices; and terminal devices whose authentication information is administered by the down server can have their authentication information re-registered by a different connection device. Additionally, the processing load associated with access authentication for terminal devices throughout the entire system can be distributed among connection devices. This affords improved stability of the access point system in access authentication of terminal devices.

While the present invention has been shown and described hereinabove with reference to a certain preferred embodiment, the invention is not limited thereto and may take any of various other embodiments without departing from the scope of the invention which is defined by the appended claims. For example, in the above example, the identifying information for a terminal device 30 is the MAC address of a swappable wireless card 310 provided to the terminal device 30, but could instead be the MAC address of the terminal device 30, or the MAC address of a swappable USB key or other device provided to terminal device 30. While MAC address and IP address are used herein as identifying information for connection device 20a and terminal device 30, passwords or other data enabling each device to be identified could be used instead. Connection device 20a could be provided with a router function and connected to the Internet 50 directly, rather than through a router 40. The network accessed by connection devices 20a, 20b, 20c is not limited to the Internet 50, and could instead be some other wide area network; the networks provided to terminal devices 30 by connection devices 20a, 20b, 20c are not limited to wireless LANs, and could instead be other kinds of wireless network.

## Claims

1. A wide area network system comprising:
a plurality of connection devices connected to a wide area network and exchanging data via said wide area network; and
terminal devices that can connect to any of said connection devices through wireless communication,
wherein said each individual connection device comprises:
authentication information archiving means that archives authentication information for a plurality of said terminal devices, said authentication information including identifying data identifying said terminal devices; and
authentication means that, when receiving from a terminal device requesting connection to said wide area network, identifying information that identifies said terminal, and when no identifying information for said terminal device requesting connection is present in the authentication information archiving means in said connection device, transmits identifying information for said terminal device to another connection device via said wide area network, and performs access authentication for said terminal device.

2. An access authentication system performing access authentication for a wide area network by verifying registered authentication information, the system comprising:
a terminal device requesting to access the wide area network,
connection devices for providing said terminal device with access points to said wide area network via wireless networks; and
an access point system organized with said connection devices, situated at a plurality of physical locations,
wherein said connection devices each comprise:
registration means for receiving from a terminal device identifying information relating to said terminal device, and that registers authentication information that includes the identifying information relating to said terminal device, and transmits to said terminal device identifying information relating to said connection device;
authentication means that, when another connection device different from the connection device provides an access point to a terminal device whose authentication information has been registered with the connection device, performs access authentication for said terminal device via said wide area network by means of cross-checking identifying information relating to said terminal device transmitted to the connection device by the another connection device via said wide area network, with the authentication information registered by said registration means; and
providing means that, when providing an access point to a terminal device whose authentication information has been registered by another connection device, receives from said terminal device identifying information relating to said another connection device and identifying information relating to said terminal device, establishes a connection with said another connection device via said wide area network on the basis of the identifying information relating to said another connection device, transmits the identifying information relating to said terminal device to said another connection device via said connection, and provides said access point to said terminal device on the basis of access authentication for said terminal device performed by said another connection device; and
wherein said terminal device comprises:
terminal registration means that, under a condition of authentication information having not being registered, when provided with an access point by a connection device, transmits to said connection device identifying information relating to said terminal device, receives from said connection device identifying information relating to said connection device, and archives said information; and
terminal providing means that, under a condition of authentication information having been registered, when provided with an access point by a connection device to which the terminal device has not transmitted the identifying information relating to the terminal device, transmits to the connection device the archived identifying information relating to the connection device to which the terminal device has transmitted its identifying information, and identifying information relating to said terminal device.

3. A connection device connected to a wide area network and exchanging data via said wide area network, said connection device comprising:
wireless communication means for exchanging information with a terminal device through wireless communication;
authentication information archiving means for archiving authentication information that includes identifying information identifying a terminal device; and
authentication means for receiving said identifying information that identifies said terminal from a terminal device requesting connection to said wide area network, transmitting said identifying information for said terminal device to another connection device via said wide area network, and performing access authentication for said terminal device, when no identifying information for said terminal device requesting connection is present in said authentication information archiving means in said connection device.

4. A connection device for providing to a terminal device that requests access to a wide area network with an access point to the wide area network via a wireless network, on the basis of access authentication performed by verifying registered authentication information for said terminal device, said connection device comprising:
registration means that, when providing an access point to a terminal device whose authentication information has not been registered, receives from said terminal device identifying information relating to said terminal device, registers authentication information that includes the identifying information relating to said terminal device, and transmits to said terminal device identifying information relating to said connection device;
authentication means that, when another connection device different from said connection device provides an access point to said terminal device whose authentication information has been registered with said connection device, performs access authentication for said terminal device via said wide area network by means of cross-checking identifying information relating to said terminal device transmitted to said connection device by the another connection device via said wide area network, with the authentication information registered by said registration means; and
providing means that, when providing an access point to a terminal device whose authentication information has been registered with another connection device, receives from said terminal device identifying information relating to the another connection device that registered said authentication information, and identifying information relating to said terminal device, establishes a connection with said another connection device via said wide area network on the basis of the identifying information relating to said another connection device, transmits the identifying information relating to said terminal device to said another connection device via said connection, and provides said access point to said terminal device on the basis of access authentication for said terminal device performed by said another connection device.

5. A connection device in accordance with claim 3 or 4 further comprising periodic registration canceling means for canceling registration of authentication information relating to a terminal device after a predetermined period of time has elapsed since registration by said registration means.

6. A connection device in accordance with claim 3, 4 or 5 further comprising instance registration deleting means for sequentially deleting registration of authentication information relating to previously registered terminal devices when instances of authentication information relating to terminal devices registered by said registration means reaches a predetermined number.

7. A connection device in accordance with claim 3, 4, 5 or 6 further comprising an administration terminal device for administering authentication information relating to terminal devices registered by said registration means.

8. A connection device in accordance with any of claims 3 to 7, wherein said identifying information relating to said terminal device is a MAC address.

9. A connection device in accordance with any of claims 3 to 8, wherein said identifying information relating to said terminal device pertains to a removable device attached to said terminal device.

10. A connection device in accordance with any of claims 3 to 9, wherein said identifying information relating to said connection device is a MAC address or global IP address on the wide area network.

11. A connection device in accordance with any of claims 3 to 10, wherein
said wide area network is the Internet; and
said wireless network is a wireless local area network capable of connecting a plurality of terminal devices.

12. A terminal device for accessing a wide area network by being provided, by a connection device via a wireless network, with an access point to the wide area network on the basis of access authentication performed by verifying registered authentication information, said terminal device comprising:
terminal registration means that, under a condition of authentication information having not being registered, when provided with an access point by a connection device, transmits to said connection device identifying information relating to said terminal device, receives from said connection device identifying information relating to said connection device, and archives said information; and
terminal providing means that, under a condition of authentication information having been registered, when provided with an access point by another connection device different from said connection device to which the terminal device has transmitted its identifying information, transmits to the another connection device the archived identifying information relating to said connection device to which the terminal device has transmitted its identifying information, and identifying information relating to said terminal device.

13. A terminal device in accordance with claim 12 comprising removable identifying information storage means for storing said identifying information relating to said terminal device, for transmission to said connection device.

14. A method of authenticating a terminal device connected via wireless communication to any of a plurality of connection devices, said connection devices being connected to a wide area network and exchanging data via said wide area network, said method comprising the steps of:
archiving authentication information for a plurality of said terminal devices, said authentication information including identifying information identifying said terminal device, at each individual connection device; and
receiving at a connection device identifying information from a terminal device requesting connection to said wide area network, searching the authentication information archived in the connection device that received said identifying information, transmitting said identifying information for said terminal device to another connection device via said wide area network when no identifying information for said terminal device requesting connection is present, and performing access authentication for said terminal device.

15. A method of performing access authentication in an access point system, the method comprising the steps of :
providing connection devices situated at a plurality of physical locations to provide terminal devices with access points to a wide area network via wireless networks,
verifying registered authentication information for a terminal device requesting to access the wide area network,
in the case of providing a terminal device whose said authentication information has not been registered, with an access point by a connection device;
the connection device receiving from said terminal device identifying information relating to said terminal device,
registering authentication information that includes the identifying information relating to said terminal device, and
transmitting to said terminal device identifying information relating to said connection device;
in the case of providing a terminal device whose authentication information has been registered in a connection device, with said access point by another connection device different from said connection device where the authentication information of the terminal device has been registered;
the another connection device receiving from said terminal device said identifying information relating to said connection device where the authentication information of the terminal device has been registered and said identifying information relating to said terminal device,
establishing a connection with the connection device where the authentication information of the terminal device has been registered via said wide area network on the basis of the identifying information relating to said connection device where the authentication information of the terminal device has been registered,
transmitting the identifying information relating to said terminal device from the another connection device to said connection device where the authentication information of the terminal device has been registered via said connection,
the connection device where the authentication information of the terminal device has been registered performing access authentication for said terminal device by cross-checking the identifying information for said terminal device with said registered authentication information; and
providing an access point to said terminal device by means of the another connection device.
